(19) Europäisches Patentamt
European Patent Office
Office européen des brevets

(11) EP 1 497 357 B1

(12) EUROPÄISCHE PATENTSCHRIFT

(45) Veröffentlichungstag und Bekanntmachung des Hinweises auf die Patenterteilung:
**10.05.2006 Patentblatt 2006/19**

(21) Anmeldenummer: **03743317.4**

(22) Anmeldetag: **20.02.2003**

(51) Int Cl.:
***C08G 77/50*** *(2006.01)* ***C08L 83/04*** *(2006.01)*

(86) Internationale Anmeldenummer:
**PCT/EP2003/001760**

(87) Internationale Veröffentlichungsnummer:
**WO 2003/074590 (12.09.2003 Gazette 2003/37)**

(54) **VERWENDUNG VON ALKENYLGRUPPEN AUFWEISENDEN SILOXANCOPOLYMEREN ALS ANTIMISTING ADDITIVE IN VERNETZBAREN SILICONBESCHICHTUNGSZUSAMMENSETZUNGEN**

USE OF SILOXANE COPOLYMERS COMPRISING ALKENYL GROUPS AS ANTIMISTING ADDITIVES IN CROSS-LINKABLE SILICONE COATING COMPOSITIONS

UTILISATION DE COPOLYMERES DE SILOXANE COMPRENANT DES GROUPES ALCENYLE COMME ADDITIFS ANTIBUEE DANS DES COMPOSITIONS RETICULABLES DE REVETEMENT AUX SILICONES

(84) Benannte Vertragsstaaten:
**BE DE FR GB NL**

(30) Priorität: **07.03.2002 DE 10210015**

(43) Veröffentlichungstag der Anmeldung:
**19.01.2005 Patentblatt 2005/03**

(73) Patentinhaber: **Wacker Chemie AG**
**81737 München (DE)**

(72) Erfinder:
- **LAUTENSCHLAGER, Hans**
**84533 Haiming (DE)**
- **HERZIG, Christian**
**83329 Feichten-Waging (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:

| | |
|---|---|
| **EP-A- 0 439 778** | **EP-A- 1 277 786** |
| **EP-B- 0 439 777** | **EP-B- 0 523 660** |
| **EP-B- 0 607 869** | **WO-A-01/98420** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 497 357 B1

## Beschreibung

Die Erfindung betrifft die Verwendung von Antimisting Additiven zur Reduktion der Aerosolbildung in vernetzbaren Siliconbeschichtungszusammensetzungen.

Ein Trend in der Siliconbeschichtungsindustrie ist die Erhöhung der Maschinengeschwindigkeit zur Steigerung der Produktivität. Werden Siliconbeschichtungen auf das Substrat bei höheren Geschwindigkeiten, beispielsweise von über 300 m/min, aufgebracht, können sich feine Sprühnebel des Siliconbeschichtungssystems bilden. Dieses Aerosol entsteht am Siliconauftragswerk. Diese Sprühnebelbildung erweist sich als ein ernstes Problem bei der weiteren Steigerung der Beschichtungsgeschwindigkeit.

Diese Sprühnebelbildung kann durch den Zusatz von sogenannten Antimisting Additiven zum Siliconbeschichtungssystem reduziert werden.

In EP-A 716 115 (Dow Corning Corp.) werden Antimisting Additive, die durch Reaktion einer Organosiliciumverbindung, einer Oxyalkylengruppen enthaltender Verbindung und eines Katalysators erhalten werden, beschrieben. Durch die Zugabe dieser Oxyalkylengruppen aufweisenden Umsetzungsprodukte zu vernetzbaren Siliconbeschichtungssystemen wird die Bildung von Aerosol in schnellen Beschichtungsprozessen reduziert.

WO 01/98420 (Dow Corning Corp.) offenbart eine flüssige Silicon Antimisting Zusammensetzung, die durch Umsetzung

(a) eines Organohydrogenpolysiloxans mit mindestens 2 Si-H-Gruppen (SiH) mit
(b) eines Organoalkenylsiloxans mit mindestens 3 Alkenylgruppen (C=C) in
(c) Gegenwart eines Platinkatalysators und gegebenenfalls
(d) eines Inhibitors

in einem Verhältnis von C=C/SiH $\geq$ 4,6 erhalten wird.
Ein extrem großer Überschuss an Organoalkenylsiloxan (C=C) ist notwendig, damit es zu keiner Vergelung kommt. Dieser Überschuss beeinflusst die Release-Eigenschaften des Basis-Systems, der vernetzbaren Siliconbeschichtungszusammensetzung. Weiterhin muss zur Verhinderung einer Vergelung ein Inhibitor zugesetzt werden.

In US-A 5,241,034 (Wacker-Chemie GmbH) sind Alkenylgruppen aufweisende Siloxancopolymere beschrieben, die verzweigt sind und worin die Organopolysiloxanblöcke über Kohlenwasserstoffbrücken verbunden sind.

Es bestand die Aufgabe Antimisting Additive für Siliconbeschichtungszusammensetzungen bereitzustellen, die die Aerosolbildung in schnellen Beschichtungsprozessen reduzieren, die mit den Siliconbeschichtungszusammensetzungen gut mischbar sind und die die Siliconbeschichtungszusammensetzungen nicht beeinträchtigen. Die Aufgabe wird durch die Erfindung gelöst.

Gegenstand der Erfindung ist die Verwendung von Antimisting Additiven in vernetzbaren Siliconbeschichtungszusammensetzungen zur Reduktion der Aerosolbildung, dadurch gekennzeichnet, dass als Antimisting Additive Alkenylgruppen aufweisende Siloxancopolymere enthaltend

(a) Siloxaneinheiten der Formel

$$R_aSi(OR^1)_bO_{\frac{4-(a+b)}{2}} \qquad (I)$$

wobei R gleiche oder verschiedene, gegebenfalls halogenierte Kohlenwasserstoffreste mit 1 bis 18 Kohlenstoffatomen je Rest,
$R^1$ gleiche oder verschiedene Alkylreste mit 1 bis 4 Kohlenstoffatomen je Rest, die durch ein Ethersauerstoffatom substituiert sein können, bedeutet,
a 0, 1, 2 oder 3,
b 0, 1, 2 oder 3
und die Summe a+b nicht größer als 3 ist,

(b) je Molekül mindestens eine Siloxaneinheit der Formel

$$ASiR_cSiO_{\frac{4-(c+1)}{2}} \qquad (II)$$

wobei R die oben dafür angegebene Bedeutung hat,
c 0, 1 oder 2 ist,
A einen Rest der Formel

$$-CH_2CHR^3-R^2(CR^3=CH_2)_{x-1}$$

wobei $R^2$ einen dreiwertigen oder vierwertigen Kohlenwasserstoffrest mit 1 bis 25 Kohlenstoffatomen je Rest,
$R^3$ ein Wasserstoffatom oder einen Alkylrest mit 1 bis 6 Kohlenstoffatomen je Rest und
x 3 oder 4, bedeutet,
und

(c) je Molekül durchschnittlich mindestens eine Einheit, ausgewählt aus der Gruppe von Einheiten der Formeln

$$O_{\frac{4-(c+1)}{2}}R_cSi-A^1-SiR_cO_{\frac{4-(c+1)}{2}} \qquad (III),$$

$$O_{\frac{4-(c+1)}{2}}R_cSi-\underset{\underset{SiR_cO_{\frac{4-(c+1)}{2}}}{|}}{A^2}-SiR_cO_{\frac{4-(c+1)}{2}} \qquad (IV),$$

$$O_{\frac{4-(c+1)}{2}}R_cSi-\overset{\overset{SiR_cO_{\frac{4-(c+1)}{2}}}{|}}{\underset{\underset{SiR_cO_{\frac{4-(c+1)}{2}}}{|}}{A^3}}-SiR_cO_{\frac{4-(c+1)}{2}} \qquad (V),$$

wobei R und c die oben dafür angegebene Bedeutung haben,
$A^1$ einen Rest der Formel

$$-CH_2CHR^3-\overset{\overset{(CR^3=CH_2)_{x-2}}{|}}{R^2}-CHR^3CH_2-$$

wobei $R^2$, $R^3$ und x die oben dafür angegebene Bedeutung haben,
$A^2$ einen Rest der Formel

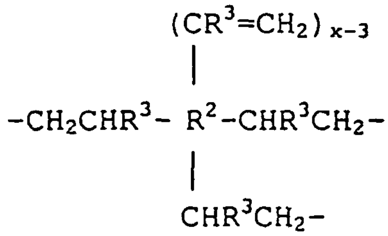

$(x-3 \geq 0)$

wobei $R^2$, $R^3$ und x die oben dafür angegebene Bedeutung haben, und
$A^3$ einen Rest der Formel

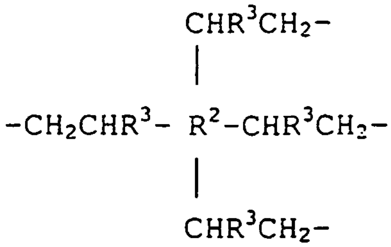

wobei $R^2$ und $R^3$ die oben dafür angegebene Bedeutung haben, mit der Maßgabe, dass $R^2$ kein oder dreiwertiger Kohlenwasserstoffrest ist, bedeutet.

Bevorzugt als Alkenylgruppen aufweisende Siloxancopolymere sind solche, die

(a) Siloxaneinheiten der Formel

$R_2SiO$ (I'),

(b) je Molekül durchschnittlich mehr als eine Siloxaneinheit der Formel

$AR_2SiO_{1/2}$ (II')

und
(c) je Molekül durchschnittlich mindestens eine Einheit, ausgewählt aus der Gruppe von Einheiten der Formeln

$O_{1/2}R_2Si\text{-}A^1\text{-}SiR_2O_{1/2}$ (III')

und

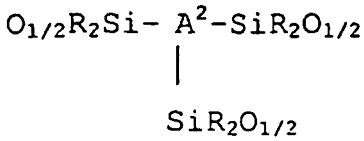

(IV')

und
wobei R, A, $A^1$ und $A^2$ die oben dafür angegebene Bedeutung haben,

enthalten.
Besonders bevorzugt enthalten die Alkenylgruppen aufweisenden Siloxancopolymere je Molekül durchschnittlich mindestens zwei Siloxaneinheiten der Formel (II').
Gegenstand der Erfindung ist weiterhin die Verwendung von Antimisting Additiven in vernetzbaren Siliconbeschichtungszusammensetzungen zur Reduktion der Aerosolbildung, dadurch gekennzeichnet, dass als Antimisting Additive Alkenylgruppen aufweisende Siloxancopolymere herstellbar, indem mindestens drei aliphatische Doppelbindungen aufweisende organische Verbindung (1) der allgemeinen Formel

$$R^2 ( CR^3=CH_2)_x,$$

wobei $R^2$ einen dreiwertigen oder vierwertigen Kohlenwasserstoffrest mit 1 bis 25 Kohlenstoffatomen je Rest, $R^3$ ein Wasserstoffatom oder einen Alkylrest mit 1 bis 6 Kohlenstoffatomen je Rest und
x 3 oder 4 bedeutet, mit Organopolysiloxan (2) mit durchschnittlich mehr als einem Si-gebundenen Wasserstoffatom je Molekül
in Gegenwart von die Anlagerung von Si-gebundenem Wasserstoff an aliphatische Doppelbindung förderndem Katalysator (3) umgesetzt wird,
wobei das eingesetzte Verhältnis von aliphatischer Doppelbindung in organischer Verbindung (1) zu Si-gebundenem Wasserstoff im Organopolysiloxan (2) ein solches ist, dass Alkenylgruppen aufweisende Siloxancopolymere mit durchschnittlich mindestens zwei Alkenylgruppen je Molekül der Formel

$$-CR^3=CH_2 ,$$

wobei $R^3$ die oben dafür angegebene Bedeutung hat,
erhalten werden, verwendet werden.

Bei dem erfindungsgemäßen Verfahren werden vorzugsweise Alkenylgruppen aufweisende Siloxancopolymere mit durchschnittlich mindestens 4 Alkenylgruppen je Molekül der Formel

$$-CR^3=CH_2 ,$$

bevorzugt durchschnittlich mindestens 8 Alkenylgruppen je Molekül der Formel

$$-CR^3=CH_2,$$

wobei $R^3$ die oben dafür angegebene Bedeutung hat, erhalten.

Die Alkenylgruppen aufweisenden Siloxancopolymere und deren Herstellung sind in der eingangs zitierten US-A 5,241,034 beschrieben.

Die erfindungsgemäßen Antimisting Additive, die Alkenylgruppen aufweisenden Siloxancopolymere, haben den Vorteil, dass sie nicht nur die Aerosolbildung vernetzbarer Siliconbeschichtungszusammensetzungen in schnellen Beschichtungssystemen reduzieren sondern dass sie insbesondere in beliebigen Mengenverhältnissen homogen mit den vernetzbaren Siliconbeschichtungszusammensetzungen mischbar sind im Gegensatz zu den Polyglykolgruppen aufweisenden Antimisting-Additiven gemäß der eingangs zitierten EP-A 716 115.

Weiterhin weisen die erfindungsgemäßen Antimisting Additive keine inhibierende Wirkung auf und sie sind lagerstabil. Die erfindungsgemäßen Antimisting Additive haben den Vorteil, dass sie vorab mit der Polymerkomponente (A) der vernetzbaren Siliconbeschichtungszusammensetzung abgemischt werden können. Sie sind damit einfach handhabbar und beeinträchtigen die Release-Eigenschaften des Basis-Systems, der vernetzbaren Siliconbeschichtungszusammensetzung, nicht.

Die erfindungsgemäßen, Alkenylgruppen aufweisenden Siloxancopolymere besitzen vorzugsweise eine Viskosität von 500 bis 5 000 000 mPa.s bei 25°C, bevorzugt 1 000 bis 1 000 000 mPa.s bei 25°C.

In den erfindungsgemäßen, Alkenylgruppen aufweisenden Siloxancopolymeren sind die Siloxanblöcke über Kohlenwasserstoffgruppen miteinander verbunden, woraus eine Kohlenwasserstoff-Siloxan-Blockstruktur resultiert. Vorzugsweise beträgt die Summe der Kohlenwasserstoffgruppen A, $A^1$, $A^2$ und $A^3$ in den Alkenylgruppen aufweisenden Siloxancopolymeren 0,1 bis 10 Gew.-%, bevorzugt 0,1 bis 2 Gew.-%, jeweils bezogen auf das Gesamtgewicht der Alkenylgruppen aufweisenden Siloxancopolymere.

Das erfindungsgemäße Polyadditionsverfahren führt zwangsläufig zu einer Polymerverteilung in bezug auf die Siloxan- wie auf die Kohlenwasserstoffblöcke. Ein solches "Polyaddukt" enthält üblicherweise auch niedere Oligomere, die auch Addukte beinhalten, welche nur aus einem Siloxanblock und zwei Kohlenwasserstoffblöcken bestehen.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest, Decylreste, wie der n-Decylrest; Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste und Aralkylreste, wie der Benzylrest, der α- und der β-Phenylethylrest. Bevorzugt ist der Methylrest.

Beispiele für halogenierte Reste R sind Halogenalkylreste, wie der 3,3,3-Trifluor-n-propylrest, der 2,2,2,2',2', 2'-Hexafluorisopropylrest, der Heptafluorisopropylrest und Halogenarylreste, wie der o-, m-, und p-Chlorphenylrest.

Beispiele für Alkylreste $R^1$ sind der Methyl-, Ethyl-, n- Propyl-, iso-Propyl-, 1-n-Butyl-, 2-n-Butyl-, iso-Butyl-, und tert.-Butylrest. Bevorzugt sind der Methyl- und Ethylrest. Beispiele für Alkylreste $R^1$, die durch ein Ethersauerstoffatom substituiert sind, sind der Methoxyethyl- und Ethoxyethylrest.

Beispiele für Alkylreste $R^3$ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest und Hexylreste, wie der n-Hexylrest. Bevorzugt ist $R^3$ ein Wasserstoffatom.

Beispiele für mindestens zwei aliphatische Doppelbindungen aufweisende organische Verbindung (1), die bei dem erfindungsgemäßen Verfahren eingesetzt wird, sind

1,5-Hexadien,
1,7-Octadien,
1, 9-Decadien,
1,11-Dodecadien,
1,13-Tetradecadien,
3,5-Dimethyl-1,6-heptadien,
3,5-Dimethyl-4-vinyl-1,6-heptadien,
1,2,4-Trivinylcyclohexan,
1,3,5-Trivinylcyclohexan,
1,4-Divinylbenzol und
1,2,3,4-Tetravinylcyclobutan,

wobei 1,2,4-Trivinylcyclohexan und 1,5-Hexadien bevorzugt sind.

Beispiele für den Rest $R^2$ sind daher solche der Formel

$-(CH_2)_2-$

$-(CH_2)_4-$

$-(CH_2)_6-$

$-(CH_2)_8-$

$-(CH_2)_{10}-$

$-C_6H_4-$

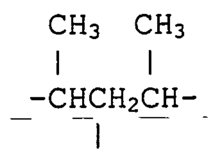

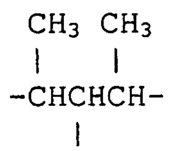

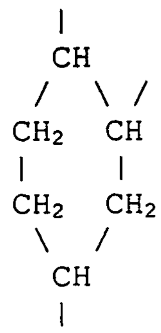

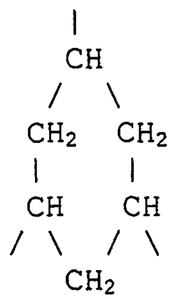

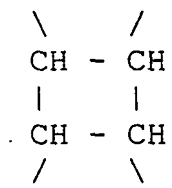

wobei die Reste der Formel

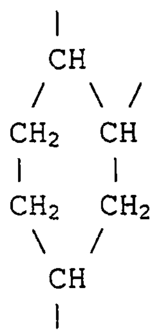

und

$-(CH_2)_2-$

bevorzugt sind.

Vorzugsweise enthalten die bei dem erfindungsgemäßen Verfahren eingesetzten Organopolysiloxane (2) durchschnittlich mindestens 1,5 Si-gebundene Wasserstoffatome, bevorzugt durchschnittlich mindestens 2 Si-gebundene Wasserstoffatome je Molekül.

Besonders bevorzugt enthalten die bei dem erfindungsgemäßen Verfahren eingesetzten Organopolysiloxane

(2) 2 bis 4 Si-gebundene Wasserstoffatome je Molekül.

Bei dem erfindungsgemäßen Verfahren kann eine Art von Organopolysiloxan (2) oder verschiedene Arten von Organopolysiloxan (2) eingesetzt werden. Auch sind die Organopolysiloxane (2) herstellungsbedingt Gemische, d.h. beispielsweise enthalten Organopolysiloxane mit 2 Si-gebundenen Wasserstoffatomen je Molekül auch Organopolysiloxane mit nur einem Si-gebundenen Wasserstoffatom je Molekül.

Vorzugsweise werden als Organopolysiloxane (2) solche der allgemeinen Formel

$$R_eH_fSiO_{\frac{4-e-f}{2}} \qquad (VI),$$

wobei R die oben dafür angegebene Bedeutung hat,
e 0 oder 1, durchnittlich 0,005 bis 1,0,
f 0, 1, 2 oder 3, durchschnittlich 1,0 bis 2,0, und
die Summe e+f nicht größer als 3 ist, bei dem erfindungsgemäßen Verfahren eingesetzt.

Bevorzugt werden als Organopolysiloxane (2) solche der allgemeinen Formel

$$H_dR_{3-d}SiO(SiR_2O)_o(SiRHO)_pSiR_{3-d}H_d \qquad (VII)$$

wobei R die oben dafür angegebene Bedeutung hat,
d 0 oder 1,
o 0 oder eine ganze Zahl von 1 bis 1000 und
p 0 oder eine ganze Zahl von 1 bis 6 bedeutet, bei dem erfindungsgemäßen Verfahren eingesetzt.

Die Organopolysiloxane (2) besitzen vorzugsweise eine Viskosität von 50 bis 20 000 mPa.s bei 25°C, bevorzugt 500 bis 10 000 mPas.s bei 25°C.

Bevorzugte Beispiele für Organopolysiloxane der Formel (VII) sind Mischpolymerisate aus Dimethylhydrogensiloxan- und Dimethylsiloxaneinheiten, Mischpolymerisate aus Dimethylhydrogensiloxan-, Dimethylsiloxan- und Methylhydrogensiloxaneinheiten, Mischpolymerisate aus Trimethylsiloxan-und Methylhydrogensiloxaneinheiten und Mischpolymerisate aus Trimethylsiloxan-, Dimethylsiloxan- und Methylhydrogensiloxaneinheiten.

Verfahren zum Herstellen von Organopolysiloxanen mit mindestens zwei Si-gebundenen Wasserstoffatomen je Molekül, auch von solchen der bevorzugten Art, sind allgemein bekannt.

Bei dem erfindungsgemäßen Verfahren wird bevorzugt als organische Verbindung (1) 1,2,4-Trivinylcyclohexan und als Organopolysiloxan (2) solches der allgemeinen Formel

$$HR_2SiO(SiR_2O)_oSiR_2H$$

wobei R die oben dafür angegebene Bedeutung hat und
o eine ganze Zahl von 50 bis 1000 bedeutet,
eingesetzt.

Organische Verbindung (1) wird bei dem erfindungsgemäßen Verfahren in solchen Mengen eingesetzt, dass das eingesetzte Verhältnis von aliphatischer Doppelbindung in organischer Verbindung (1) zu Si-gebundenem Wasserstoff in Organopolysiloxan (2) vorzugsweise 1,1 : 1 bis 20 : 1, bevorzugt 1,5 : 1 bis 10 : 1, besonders bevorzugt 1,5 : 1 bis 5 : 1, insbesonders 1,5 :1 bis 3,0 : 1, beträgt.

Als die Anlagerung von Si-gebundenem Wasserstoff an aliphatische Mehrfachbindung fördernde Katalysatoren können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie
Platinhalogenide, z.B. $PtCl_4$, $H_2PtCl_6*6H_2O$, $Na_2PtCl_4*4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6*6H_2O$ und Cyclohexanon, Platin-Vinylsiloxankomplexe, wie Platin-1,3-Divinyl-1,1,3,3-tetra-methyl-disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Der Katalysator (3) wird vorzugsweise in Mengen von 0,5 bis 1 000 Gew.-ppm (Gewichtsteilen je Million Gewichtsteilen), bevorzugt in Mengen von 2 bis 50 Gew.-ppm, jeweils berechnet als elementares Platin und bezogen auf das Gesamtgewicht von organische Verbindung (1) und Organopolysiloxan (2).

Das erfindungsgemäße Verfahren wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird das erfindungsgemäße Verfahren vorzugsweise bei einer Temperatur von 20°C bis 150°C, bevorzugt 20°C bis 80°C, durchgeführt.

Da die mindestens zwei aliphatische Doppelbindungen aufweisende organische Verbindung (1), z. B. 1,2,4-Trivinylcyclohexan, bei höheren Temperaturen zur Polymerisation neigt, können bei dem erfindungsgemäßen Verfahren Radikalinhibitoren, wie 4-Methoxyphenol, 2,6-Bis(tert.butyl)-4-methylphenol, Phenothiazin, Hydrochinon oder Brenzcatechin mitverwendet werden. Die Radikalinhibitoren werden dabei vorzugsweise in Mengen von 10 bis 500 Gew.-ppm, bezogen auf das Gesamtgewicht an organischer Verbindung (1) und Organopolysiloxan (2), eingesetzt.

Bei dem erfindungsgemäßen Verfahren können inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Octanisomere, Butylacetat, 1,2-Dimethoxyethan, Tetrahydrofuran und Cyclohexan.

Von den nach dem erfindungsgemäßen Verfahren hergestellten Alkenylgruppen aufweisenden Siloxancopolymeren wird vorzugsweise überschüssige organische Verbindung (1) sowie gegebenenfalls mitverwendetes inertes organisches Lösungsmittel destillativ entfernt.

Alternativ zu organischen Lösungsmitteln können inerte Siliconöle bei dem erfindungsgemäßen Verfahren mitverwendet werden oder das organische Lösungsmittel nach der Herstellung der verzweigten erfindungsgemäßen Siloxancopolymere gegen diese ausgetauscht werden.

Zur besseren Handhabung können organische Lösungsmittel nach der Herstellung der verzweigten erfindungsgemäßen Siloxancopolymere auch gegen reaktive Siliconöle ausgetauscht werden, indem man diese der Reaktionsmischung zusetzt und danach das Lösungsmittel destillativ entfernt. Bevorzugt sind Siliconöle mit einer Viskosität von bis zu 100 $mm^2/s$ bei 25°C und SiC-gebundenen Alkenylresten als Reaktivbestandteil.

Die nach dem erfindungsgemäßen Verfahren hergestellten Alkenylgruppen aufweisenden Siloxancopolymere werden gegebenenfalls mit Organopolysiloxan (4) equilibriert.

Als Organopolysiloxane (4) werden vorzugsweise solche ausgewählt aus der Gruppe bestehend aus vorzugsweise linearen, endständige Triorganosiloxygruppen aufweisenden Organopolysiloxanen der Formel

$$R_3SiO(SiR_2O)_rSiR_3,$$

wobei R die oben dafür angegebene Bedeutung hat und
r 0 oder eine ganze Zahl im Wert von vorzugsweise 1 bis 1500, bevorzugt 10 bis 300, ist,
linearen, endständige Hydroxylgruppen aufweisenden
Organopolysiloxanen der Formel

$$HO(SiR_2O)_sH,$$

wobei R die oben dafür angegebene Bedeutung hat und
s eine ganze Zahl im Wert von vorzugsweise 1 bis 1500, bevorzugt 10 bis 300, ist,
verzweigten, gegebenenfalls Hydroxylgruppen aufweisenden Organopolysiloxanen aus Einheiten der Formel

$$R_3SiO_{1/2},\ R_2SiO \text{ und } RSiO_{3/2},$$

wobei R die oben dafür angegebene Bedeutung hat, cyclischen Organopolysiloxanen der Formel

$$(R_2SiO)_t, ,$$

wobei R die oben dafür angegebene Bedeutung hat und
t eine ganze Zahl von 3 bis 12 ist,
und Mischpolymerisaten aus Einheiten der Formel

$$R_2SiO \text{ und } RSiO_{3/2},$$

wobei R die oben dafür angegebene Bedeutung hat, eingesetzt.

Bevorzugte Organopolysiloxane (4) sind vorzugsweise die der Formeln $R_3SiO(SiR_2O)_rSiR_3$, $HO(SiR_2O)_sH$ und $(R_2SiO)_t$, wobei diejenigen der Formel $R_3SiO(SiR_2O)_rSiR_3$ besonders bevorzugt sind.

Das Mengenverhältnis der bei der gegebenenfalls durchgeführten Equilibrierung eingesetzten Organopolysiloxane (4) und Alkenylgruppen aufweisenden Siloxancopolymere wird lediglich durch den gewünschten Anteil der Alkenylgruppen in den bei der gegebenenfalls durchgeführten Equilibrierung erzeugten Siloxancopolymeren und durch die gewünschte mittlere Kettenlänge bestimmt.

Bei dem gegebenenfalls durchgeführten Equilibrieren werden vorzugsweise basische oder saure Katalysatoren, welche die Equilibrierung fördern, eingesetzt. Beispiele für basische Katalysatoren sind vorzugsweise Alkalihydroxide, wie Natriumhydroxid, Kaliumhydroxid, und Cäsiumhydroxid, Trimethylbenzylammoniumhydroxid und Tetramethylammoniumhydroxid. Bevorzugt sind Alkalihydroxide. Alkalihydroxide werden vorzugsweise in Mengen von 50 bis 10 000 Gew.-ppm (= Teile je Million), insbesondere 500 bis 2 000 Gew.-ppm, jeweils bezogen auf das Gesamtgewicht der eingesetzten Alkenylgruppen aufweisenden Siloxancopolymere und eingesetzten Organopolysiloxane (4), verwendet.

Beispiele für saure Katalysatoren sind vorzugsweise Schwefelsäure, Phosphorsäure, Trifluormethansäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1000 Gew.-ppm (=Teile je Million), insbesondere 50 bis 200 Gew.-ppm, jeweils bezogen auf das Gesamtgewicht der eingesetzten Organosiliciumverbindungen, verwendet.

Die gegebenenfalls durchgeführte Equilibrierung wird vorzugsweise bei 100°C bis 150°C und beim Druck der umgebenden Atmosphäre, also etwa bei 1020 hPa (abs.) durchgeführt. Falls erwünscht, können aber auch höhere oder niedrigere Drücke angewendet werden. Das Equilibrieren wird vorzugsweise in 5 bis 20 Gew.-%, bezogen auf das Gesamtgewicht der jeweils eingesetzten Alkenylgruppen aufweisenden Siloxancopolymere und eingesetzten Organopolysiloxane (4), in mit Wasser nichtmischbarem Lösungsmittel, wie Toluol, durchgeführt. Vor dem Aufarbeiten des bei dem Equilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Als Antimisting Additive werden bevorzugt solche Alkenylgruppen aufweisende Siloxancopolymere eingesetzt, die ohne einen weiteren Equilibrierungsschritt hergestellt werden und besonders hohe Verzweigung aufweisen. Bevorzugte Additive werden erhalten, wenn in den angegebenen besonders bevorzugten stöchiometrischen Bereichen gearbeitet wird.

Die erfindungsgemäßen Antimisting Additive werden zur Reduktion der Aerolsolbildung den vernetzbaren Siliconbeschichtungszusammensetzungen zugegeben.

Die erfindungsgemäßen Antimisting Additive, die Alkenylgruppen aufweisenden Siloxancopolymere, werden in den vernetzbaren Siliconbeschichtungszusammensetzungen vorzugsweise in Mengen von 0,5 bis 10 Gew.-%, bevorzugt 1 bis 5 Gew.-%, bezogen auf das Gesamtgewicht der vernetzbaren Siliconbeschichtungszusammensetzungen, eingesetzt.

Als vernetzbare Siliconbeschichtungszusammensetzungen werden vorzugsweise solche enthaltend

(A) Organosiliciumverbindungen, die Reste mit aliphatischen Kohlenstoff-Kohlenstoff-Mehrfachbindungen aufweisen,
(B) Organosiliciumverbindungen mit Si-gebundenen Wasserstoffatomen
(C) Die Anlagerung von Si-gebundenem Wasserstoff an aliphatische Mehrfachbindung fördernde Katalysatoren und gegebenenfalls
(D) Inhibitoren
eingesetzt.

Bei den vernetzbaren Siliconbeschichtungszusammensetzungen kann vorzugsweise eine Art des erfindungsgemäßen Antimisting Additivs (X) oder verschiedene Arten des erfindungsgemäßen Antimisting Additivs (X) eingesetzt werden.

Als Organopolysiloxane (A), die Reste mit aliphatischen Kohlenstoff-Kohlenstoff-Mehrfachbindungen aufweisen, werden lineare oder verzweigte Organopolysiloxane der allgemeinen Formel

$$R^6_gR^5_{3-g}SiO\ (SiR^5_2O)_v\ (SiR^5R^6O)_wSiR^5_{3-g}R^6_g \qquad (IX)$$

wobei $R^5$ einen einwertigen, gegebenenfalls substituierten, von aliphatischen Kohlenstoff-Kohlenstoff-Mehrfachbindungen freien Kohlenwasserstoffrest mit 1 bis 18 Kohlenstoffatomen je Rest und
$R^6$ einen einwertigen Kohlenwasserstoffrest mit terminaler, aliphatischer Kohlenstoff-Kohlenstoff-Mehrfachbindung mit 2 bis 8 Kohlenstoffatomen je Rest bedeutet,

g 0, 1 oder 2,
v 0 oder eine ganze Zahl von 1 bis 1500 und
w 0 oder eine ganze Zahl von 1 bis 200 ist,
mit der Maßgabe, dass durchschnittlich mindestens 1,5 Reste $R^6$, bevorzugt durchschnittlich mindestens 2 Reste $R^6$, enthalten sind, verwendet.

Im Rahmen dieser Erfindung soll Formel (IX) so verstanden werden, dass v Einheiten - $(SiR^5{}_2O)$ - und w - Einheiten - $(SiR^5R^6O)$ - in beliebiger Weise im Organopolysiloxanmolekül verteilt sein können.

Als Organosiliciumverbindungen (A) können auch verzweigte Polymere mit endständigen ω-Alkenylgruppen, bevorzugt Si-gebundene Vinylgruppen, wie sie in US 6,034,225, insbesondere Spalte 1, Zeile 43 bis Spalte 2, Zeile 13, und US 6,258,913, insbesondere Spalte 1, Zeile 62 bis Spalte 2, Zeile 35, beschrieben sind, verwendet werden. Als Organosiliciumverbindungen (A) können auch lineare Organopolysiloxane, wie sie in US 6,274,692, insbesondere Spalte 2, Zeile 3 bis 27, beschrieben sind und die nicht an beiden Enden je einen aliphatisch ungesättigten Kohlenwasserstoffrest, wie eine Si-gebundene Vinylgruppe, aufweisen sondern an den Enden auch aliphatisch gesättigte Kohlenwasserstoffreste, wie Si-gebundene Methylgruppen aufweisen, verwendet werden. Als Organosiliciumverbindungen (A) können auch solche, wie sie in DE-A 195 22 144 , insbesondere Seite 2, Zeile. 44 bis 67, DE-A 196 29 053, insbesondere Seite 2, Zeile 51 bis Seite 3, Zeile 29, US-A 5,760,145, insbesondere Spalte 2, Zeile 46 bis Spalte 4, Zeile 23 und US-A 6,265,497 , insbesondere Spalte 2, Zeile 3 bis 47, beschrieben sind, verwendet werden.

Die Organopolysiloxane (A) besitzen vorzugsweise eine durchschnittliche Viskosität von 100 bis 10 000 mPa.s bei 25°C.

Beispiele für Kohlenwasserstoffreste $R^5$ sind Alkylreste, wie der Methyl-, Ethyl-, n-Propyl-, iso-Propyl-, n-Butyl-, iso-Butyl-, tert.- Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest, Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für Reste $R^6$ sind Alkenylreste, wie der Vinyl-, 5-Hexenyl-, Allyl-, 3-Butenyl- und 4-Pentenylrest; und Alkinylreste, wie der Ethinyl-, Propargyl- und 1-Propinrest.

Als Organosiliciumverbindungen (B), die Si-gebundene Wasserstoffatome aufweisen, werden vorzugsweise lineare, cyclische oder verzweigte Organopolysiloxane aus Einheiten der allgemeinen Formel

$$R^5{}_eH_fSiO_{\frac{4-e-f}{2}} \quad (X),$$

wobei
$R^5$ die oben dafür angegebene Bedeutung hat,
e 0, 1, 2 oder 3,
f 0, 1 oder 2
und die Summe von e+f 0, 1, 2 oder 3 ist,
mit der Maßgabe, dass durchschnittlich mindestens 2 Si-gebundene Wasserstoffatome vorliegen, verwendet.

Vorzugsweise enthalten die Organosiliciumverbindungen (B) mindestens 3 Si-gebundene Wasserstoffatome.

Bevorzugt werden als Organosiliciumverbindungen (B) Organopolysiloxane der allgemeinen Formel

$$H_hR^5{}_{3-h}SiO\ (SiR^5{}_2O)_o\ (SiR^5HO)_p SiR^5{}_{3-h}H_h \quad (XI)$$

wobei $R^5$ die oben dafür angegebene Bedeutung hat,
h 0, 1 oder 2,
o 0 oder eine ganze Zahl von 1 bis 1500 und
p 0 oder eine ganze Zahl von 1 bis 200 ist,
mit der Maßgabe, dass durchschnittlich mindestens 2 Si-gebundene Wasserstoffatome, vorliegen, verwendet.

Im Rahmen dieser Erfindung soll Formel (XI) so verstanden werden, dass o Einheiten - $(SiR^5{}_2O)$ - und p Einheiten -$(SiR^5HO)$-in beliebiger Weise im Organopolysiloxanmolekül verteilt sein können.

Beispiele für solche Organopolysiloxane sind insbesondere Mischpolymerisate aus Dimethylhydrogensiloxan-, Methylhydrogensiloxan-,Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan-und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogensiloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan-und/oder Phenylmethylsiloxaneinheiten.

Als Organosiliciumverbindungen (B) können auch solche, wie sie in US-A 5,691,435 , insbesondere Spalte 3, Zeile 45 bis Spalte 4, Zeile 29, beschrieben sind, verwendet werden.

Die Organopolysiloxane (B) besitzen vorzugsweise eine durchschnittliche Viskosität von 10 bis 1 000 mPa.s bei 25°C.

Organosiliciumverbindung (B) wird vorzugsweise in Mengen von 0,5 bis 3,5, bevorzugt 1,0 bis 3,0 Grammatom Si-gebundenen Wasserstoff je Mol Si-gebundenen Restes mit aliphatischer Kohlenstoff-Kohlenstoff-Mehrfachbindung in der Organosiliciumverbindung (A) eingesetzt.

Als die Anlagerung von Si-gebundenem Wasserstoff an aliphatische Mehrfachbindungen fördernde Katalysatoren können auch bei den vernetzbaren Siliconbeschichtungszusammensetzungen die gleichen Katalysatoren eingesetzt werden, die auch bisher zur Förderung der Anlagerung von Si-gebundenem Wasserstoff an aliphatische Mehrfachbindung eingesetzt werden konnten. Als Bestandteil (C) werden vorzugsweise die oben genannten Katalysatoren (3) verwendet.

Die Katalysatoren (C) werden vorzugsweise in Mengen von 10 bis 1000 Gew.-ppm (Gewichtsteilen je Million Gewichtsteilen), bevorzugt 50 bis 200 Gew.-ppm, jeweils berechnet als elementares Platinmetall und bezogen auf das Gesamtgewicht der Organosiliciumverbindungen (A) und (B), eingesetzt.

Die vernetzbaren Siliconbeschichtungszusammensetzungen können die Anlagerung von Si-gebundenem Wasserstoff an aliphatische Mehrfachbindung bei Raumtemperatur verzögernde Mittel, sogenannte Inhibitoren (D), enthalten.

Als Inhibitoren (D) können auch bei den vernetzbaren Siliconbeschichtungszusammensetzungen alle Inhibitoren verwendet werden, die auch bisher für den gleichen Zweck verwendet werden konnten.

Beispiele für Inhibitoren (D) sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol, eine Mischung aus Diallylmaleinat und Vinylacetat, Maleinsäuremonoester, und Inhibitoren wie die Verbindung der Formel $HC{\equiv}C\text{-}C\ (CH_3)\ (OH)\text{-}CH_2\text{-}CH_2\text{-}CH{=}C(CH_3)2$, käuflich erwerblich unter dem Handelsnamen "Dehydrolinalool" bei der Fa. BASF.

Wird Inhibitor (D) mitverwendet, so wird er zweckmäßig in Mengen von vorzugsweise 0,01 bis 10 Gew.-%, bevorzugt 0,01 bis 3 Gew.-%, bezogen auf das Gesamtgewicht der Organosiliciumverbindungen (A) und (B), eingesetzt.

Beispiele für weitere Bestandteile, die bei den vernetzbaren Siliconbeschichtungszusammensetzungen mitverwendet werden können, sind Mittel zur Einstellung der Trennkraft, organische Lösungsmittel, Haftvermittler und Pigmente.

Beispiele für Mittel zur Einstellung der Trennkraft der mit den erfindungsgemäßen Zusammensetzungen hergestellten klebrige Stoffe abweisenden Überzüge sind Siliconharze aus Einheiten der Formel

$$R^7R^5_2SiO_{1/2} \text{ und } SiO_2 ,$$

sogenannte MQ-Harze, wobei $R^7$ ein Wasserstoffatom, ein Kohlenwasserstoffrest $R^5$, wie Methylrest, ein Alkenylrest $R^6$, wie Vinylrest, ist, und $R^5$ und $R^6$ die oben dafür angegebene Bedeutung haben und die Einheiten der Formel $R^7R^5_2SiO_{1/2}$ gleich oder verschieden sein können. Das Verhältnis von Einheiten der Formel $R^7R^5_2SiO_{1/2}$ zu Einheiten der Formel $SiO_2$ beträgt vorzugsweise 0,6 bis 2. Die Siliconharze werden vorzugsweise in Mengen von 5 bis 80 Gew.-%, bezogen auf das Gesamtgewicht der Organosiliciumverbindungen (A) und (B), eingesetzt.

Beispiele für organische Lösungsmittel sind Benzine, z. B. Alkangemische mit einem Siedebereich von 70°C bis 180°C, n-Heptan, Benzol, Toluol und Xylole, halogenierte Alkane mit 1 bis 6 Kohlenstoffatom(en), wie Methylenchlorid, Trichlorethylen und Perchlorethylen, Ether, wie Di-n-butyl-ether, Ester, wie Ethylacetat, und Ketone, wie Methylethylketon und Cyclohexanon.

Werden organische Lösungsmittel mitverwendet, so werden sie zweckmäßig in Mengen von vorzugsweise 10 bis 90 Gew.-%, bevorzugt 10 bis 70 Gew.-%, bezogen auf das Gesamtgewicht der Organosiliciumverbindungen (A) und (B), eingesetzt.

Die Reihenfolge beim Vermischen der Bestandteile (X), (A), (B), (C) und gegebenenfalls (D) ist zwar nicht entscheidend, für die Praxis hat es sich jedoch bewährt, den Bestandteil (C), also den Katalysator, dem Gemisch der anderen Bestandteile zuletzt zuzusetzen.

Die Vernetzung der erfindungsgemäßen Zusammensetzungen erfolgt vorzugsweise bei 70°C bis 180°C. Als Energiequellen für die Vernetzung durch Erwärmen werden vorzugsweise Öfen, z. B. Umlufttrockenschränke, Heizkanäle, beheizte Walzen, beheizte Platten oder Wärmestrahlen des Infrarotbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Gegenstand der Erfindung sind weiterhin Formkörper hergestellt durch Vernetzung der erfindungsgemäßen Zusammensetzungen.

Bei den Formkörper handelt es sich vorzugsweise um Beschichtungen, bevorzugt um klebrige Stoffe abweisende Überzüge.

Gegenstand der Erfindung ist weiterhin ein Verfahren zur Herstellung von Beschichtungen durch Auftragen von erfindungsgemäßen vernetzbaren Zusammensetzungen auf die zu beschichtenden Oberflächen und anschließende Vernetzung der Zusammensetzungen.

Die erfindungsgemäßen vernetzbaren Zusammensetzungen werden bevorzugt zur Herstellung von klebrige Stoffe abweisenden Überzügen, z.B. zur Herstellung von Trennpapieren, verwendet. Klebrige Stoffe abweisende Überzüge werden hergestellt durch Auftragen von erfindungsgemäßen vernetzbaren Zusammensetzungen auf die klebrige Stoffe abweisend zu machenden Oberflächen und anschließende Vernetzung der Zusammensetzungen.

Das Auftragen von den erfindungsgemäßen Zusammensetzungen auf die zu beschichtenden Oberflächen, bevorzugt klebrige Stoffe abweisend zu machenden Oberflächen, kann in beliebiger, für die Herstellung von Beschichtungen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Die Schichtdicke auf den zu beschichtenden Oberflächen beträgt vorzugsweise 0,3 bis 6 µm, besonders bevorzugt 0,5 bis 2,0 µm.

Bei den zu beschichtenden Oberflächen, bevorzugt klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststofffolien, z. B. Polyethylenfolien oder Polypropylenfolien, gewebtem und ungewebtem Tuch aus natürlichen oder synthetischen Fasern, keramischen Gegenständen, Glas, einschließlich Glasfasern, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m$^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad,
holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunstoff, Holz oder Eisen, das für Lagerung und/oder Transport von klebrigen Gütern, wie Klebstoffen, klebrigen Lebensmitteln, z. B. Kuchen, Honig, Bonbons und Fleisch; Bitumen, Asphalt, gefetteten Materialien und Rohgummi, bestimmt ist. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die die erfindungsgemäßen Antimisting Additiven enthaltenden vernetzbaren Siliconbeschichtungszusammensetzungen eignen sich insbesondere zur Verwendung in schnellen Beschichtungssystemen mit Beschichtungsgeschwindigkeiten vorzugsweise von 300 bis 2000 m/min, bevorzugt 400 bis 1500 m/min, bei denen die erfindungsgemäßen Zusammensetzungen bei hohen Geschwindigkeiten auf die zu beschichtenden Oberflächen aufgebracht werden.

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

Beim off-line Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstoffilm, der beispielsweise auf einem Etikettenfacepapier aufliegt, auf das beschichtete Papier aufgetragen und der Verbund wird dann zusammengepreßt. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepresst. Beim off-line Verfahren richtet sich die Aufwickelgeschwindigkeit nach der Zeit, die notwendig ist, um den Siliconüberzug klebfrei zu machen. Beim in-line Verfahren richtet sich die Verfahrensgeschwindigkeit nach der Zeit, die notwendig ist, um den Siliconüberzug migrationsfrei zu machen. Das off-line Verfahren und das in-line Verfahren kann mit den erfindungsgemäßen Zusammensetzungen bei einer Geschwindigkeit von 300 bis 2000 m/min, bevorzugt 400 bis 1500 m/min, betrieben werden.

**1. Herstellung der Alkenylgruppen aufweisenden Siloxancopolymere:**

Beispiel 1:

Bei 25°C löst man 683 g eines α,ω-Dihydrogensiloxans der mittleren Kettenlänge $Si_{225}$ sowie 7,72 g Trivinylcyclohexan in 1036 g Toluol (C=C/SiH = 1,74) und setzt unter gutem Rühren soviel einer 1 Gew.-%igen (bezogen auf elementares Platin) Lösung eines Platin-1,3-Divinyl-1,1,3,3-tetramethyldisiloxan-Komplexes in einem α,ω-Divinyldimethylpolysiloxan mit einer Viskosität von 1000 mPa.s bei 25°C (einer Lösung des sogenannten Karstedt-Katalysators, dessen Herstellung in US 3,775,452 beschrieben ist) zu, dass die Lösung 10 ppm Platin enthält. Während 4 h bei 30 °C wird die Viskosität sehr viel höher bis schließlich 3900 $mm^2/s$ (25°C) erreicht werden. Man setzt 2072 g divinylterminiertes Polydimethylsiloxan mit 200 $mm^2/s$ (25°C) zu und entfernt das Toluol im Vakuum. Das resultierende Produkt hat eine Viskosität von 7300 $mm^2/s$ (25°C).

Beispiel 2:

Bei 25°C löst man 683 g eines α,ω-Dihydrogensiloxans der mittleren Kettenlänge $Si_{225}$ sowie 7,72 g Trivinylcyclohexan in 1036 g Toluol (C=C/SiH = 1,74) und setzt unter gutem Rühren soviel des in Beispiel 1 beschriebenen Karstedtkatalysators zu, dass die Lösung 10 ppm Platin enthält. Während 4 h bei 30 °C wird die Viskosität sehr viel höher bis schließlich 3900 $mm^2/s$ (25°C) erreicht werden. Man setzt 1036 g trimethylsilylterminiertes Polydimethylsiloxan mit 9,8 $mm^2/s$ (25°C) zu und entfernt das Toluol im Vakuum und ersetzt es durch die gleiche Menge 1-Dodecen. Man erhält so eine Lösung eines vinylfunktionellen verzweigten Siloxanpolymers in 1-Dodecen mit der Viskosität 4380 $mm^2/s$ (25°C).

Beispiel 3:

Bei 25°C löst man 683 g eines α,ω-Dihydrogensiloxans der mittleren Kettenlänge $Si_{225}$ sowie 7,72 g Trivinylcyclohexan in 1036 g Toluol (C=C/SiH = 1,74) und setzt unter gutem Rühren soviel des in Beispiel 1 beschriebenen Karstedtkatalysators zu, dass die Lösung 10 ppm Platin enthält. Während 4 h bei 30 °C wird die Viskosität sehr viel höher bis schließlich 3900 $mm^2/s$ (25°C) erreicht werden. Man setzt 1036 g trimethylsilylterminiertes Polydimethylsiloxan mit 9,8 $mm^2/s$ (25°C) zu und entfernt das Toluol im Vakuum. Das resultierende Produkt hat eine Viskosität von 11600 $mm^2/s$ (25°C).

Beispiel 4:

492 g eines α,ω-Dihydrogensiloxans der mittleren Kettenlänge $Si_{50,2}$ werden mit 24,5 g Trivinylcyclohexan (C=C/SiH = 1,70) und 516,5 g Toluol homogen gemischt und mit 3 mg Platin, zugegeben als in Beispiel 1 beschriebene Karstedt-Katalysatorlösung, aktiviert. Der Ansatz wird 2 h bei 80 °C gerührt, dann werden 515 g 1- Dodecen zugegeben und das Toluol unter vermindertem Druck entfernt. Man erhält eine 50%-ige Lösung eines vinylfunktionellen verzweigten Siloxanpolymers in 1-Dodecen mit der Viskosität 275 $mm^2/s$ (25°C).

Beispiel 5:

492 g eines α,ω-Dihydrogensiloxans der mittleren Kettenlänge $Si_{14,9}$ werden mit 80,5 g Trivinylcyclohexan (C=C/SiH = 1,65) und 573 g eines mit trimethylsilylterminierten Polydimethylsiloxans der Viskosität 9,8 $mm^2/s$ (25°C) homogen gemischt und mit 3 mg Platin, zugegeben als in Beispiel 1 beschriebene Karstedt-Katalysatorlösung, aktiviert.

Nach selbständiger Erwärmung wird der Ansatz noch 1 h bei 80 °C gehalten und dann abgekühlt. Man erhält eine 50%-ige Lösung eines vinylfunktionellen verzweigten Siloxanpolymers mit der Viskosität 660 $mm^2/s$ (25°C).

Beispiel 6:

592 g eines $\alpha,\omega$-Dihydrogensiloxans der mittleren Kettenlänge $Si_{14,9}$ werden mit 83 g Trivinylcyclohexan gemischt (C=C/SiH=1,70) und mit 3 mg Platin, zugegeben als in Beispiel 1 beschriebene Karstedt-Katalysatorlösung, aktiviert. Das Reaktionsgemisch erreicht in ca. 3 Minuten 110°C und wird dabei erheblich viskoser. Nach entfernung flüchtiger Bestandteile erhält man ein klares Öl der Viskosität 9400 $mm^2/s$ bei 25 °C. Es enthält Si-C-gebundene $\alpha$-olefinische Doppelbindungen, die hydrosilylierbar sind.

**2. Verwendung der Alkenylgruppen aufweisenden Siloxancopolymere als Antimisting Additive:**

Beispiel 7:

Die Anwendung der erfindungsgemäßen Alkenylgruppen aufweisenden Siloxancopolymere zur Reduktion der Aerosolbildung erfolgt als Additiv in vernetzbaren Siliconbeschichtungssystemen für den Einsatz in schnellen Beschichtungsprozessen.

Als Standardformulierung wurde eine Mischung aus

100 Gew.-teile eines linearen $\alpha,\omega$-Divinyldimethylpolysiloxans mit einer Viskosität von 300 mPa·s (25°C), 3,1 Gew.-teile eines linearen Polysiloxans aus Hydrogenmethylsiloxan- und Dimethylsiloxaneinheiten im Molverhältnis 2 : 1 mit Trimethylsiloxanendeinheiten und einer Viskosität von 34 mPa·s (25°C),

1,25 Gew.-teile einer 1 Gew.-%igen (bezogen auf elementares Platin) Lösung eines Platin-1,3-Divinyl-1,1,3,3-tetramethyl-disiloxan-Komplexes in einem $\alpha,\omega$-Divinyldimethylpolysiloxan mit einer Viskosität von 1000 mPa·s bei 25°C und 0,3 Gew.-teile 1-Ethinylcyclohexanol eingesetzt.

Die erfindungsgemäßen Additive gemäß den in Tabelle 1 angegebenen Herstellungsbeispielen wurden der Standardformulierung gemäß den in Tabelle 1 angegebenen Mengen zugesetzt. Als Vergleich wurde eine Standardformulierung ohne erfindungsgemäßes Additiv eingesetzt. Diese Mischungen wurden zur Papierbeschichtung eingesetzt.

Als Substrat wurde Papier der Fa. Ahlstrom mit der Bezeichnung Glassine Larice Tipo 325 mit 62 $g/m^2$ verwendet. Die Beschichtung erfolgte auf der Beschichtungsanlage "BMB Pilotplant" der Fa. Bachofen & Meier AG mit einem 5 Walzen-Auftragswerk, bei 550 m/min. Dabei wurde die Auftragsrolle mit 95% der Papiergeschwindigkeit gefahren. Die Beschichtung wurde im Trocknungsofen mit 18 m Länge bei 160°C ausgehärtet. Dies entspricht einer Vernetzungszeit von 1,96 Sekunden.

Die Aerosolbildung wurde mit dem Dusttrak Aerosol Monitor Model 8520 bestimmt. Die Probennahme erfolgt zwischen Siliconauftragswalze und Walzenspalt in einem Abstand von 12 cm zur Siliconauftragswalze.

Der Blindwert an Aerosolen vor den Beschichtungsversuchen lag zwischen 0,028 - 0,031 $mg/m^3$. Während der Beschichtungsversuche wurden die minimalen und maximal angezeigten Aerosolwerte protokolliert und der Durchschnitt errechnet. Die durchschnittlich gemessenen Aerosolwerte während der Beschichtungsversuche würden um den Blindwert von 0,03 $mg/m^3$ korrigiert, um den reinen Effekt der erfindungsgemäßen Antimisting Additive zu ermitteln.

Das Beschichtungsgewicht wurde mittels Röntgenfluoreszenzanalyse in Referenz zu einem geeigneten Standard bestimmt.

Da die Stärke der Aerosolbildung u.a. vom Beschichtungsgewicht abhängig ist, wurden die mittleren berechneten Aerosolwerte auf ein Beschichtungsgewicht von 1 $g/m^2$ zur besseren Vergleichbarkeit normiert.

Der Einfluss der erfindungsgemäßen Antimisting Additive auf die Aushärtung des Beschichtungssystems wurde sofort mittels Migrationstest bestimmt und parallel mittels Extraktion unvernetzter Anteile in MIBK (=Methylisobutylketon). Die Migration wird entsprechend ihres Ausmaßes mit den Noten 1 bis 6 beurteilt, wobei die Note 1 keine Migration (vollständige Aushärtung), die Note 3 eine leichte und die Note 6 eine starke Migration (unvollständige Aushärtung) bedeutet.

Der Einfluss der erfindungsgemäßen Antimisting Additive auf die Haftung des Beschichtungssystems zum Substrat wurde mittels Rub-off-Test bestimmt. Der Abrieb wird entsprechend seines Ausmaßes mit den Noten von 1 bis 6 beurteilt, wobei die Note 1 keinen Abrieb, die Note 3 einen leichten und die Note 6 einen starken Abrieb bedeutet.

Die Testmethoden sind in der Broschüre DEHESIVE® Silicones Testmethoden der Fa. Wacker-Chemie GmbH beschrieben.

Die Ergebnisse sind in der Tabelle 1 zusammenfasst.

Tabelle 1:

| Additiv | Men -ge [%] | Misting [$mg/m^3$] min. max. mittel | | | mittl. Misting [$mg/m^3$] normiert auf 1,0 $g/m^2$ | Migration Abrieb | Extrakt [%] in MIBK | |
|---|---|---|---|---|---|---|---|---|
| Beisp. 2 | 5 | 0,674 | 1,372 | 0,967 | 0,65 | 1 | 2 | 3,9 |
| Beisp. 1 | 8 | 0,504 | 0,989 | 0,687 | 0,42 | 1 | 1 | 5,3 |
| - | - | 19,47 | 30,17 | 24,27 | 16,51 | 1 | 2 | 3,9 |

Die Beispiele im Vergleich zum Vergleichsversuch ohne Additiv zeigen, dass der Zusatz der erfindungsgemäßen Antimisting Additive die Aerosolbildung vernetzbarer Siliconbeschichtungssysteme in schnellen Beschichtungsprozessen deutlich reduziert.
Nachteilige Effekte bei Migration und Substrathaftung (Abrieb) werden nicht beobachtet; der Anteil der extrahierbaren Anteile ist im Rahmen der Messgenauigkeit nicht erhöht.

Beispiel 8:

Bei hohem Auftragsgewicht und bestimmten Beschichtungsformulierungen kann die Aerosolbildung bereits bei Maschinengeschwindigkeiten deutlich unter 500 m/min auftreten. Die Anwendung der erfindungsgemäßen Alkenylgruppen aufweisenden Siloxancopolymere zur Reduktion der Aerosolbildung erfolgte als Additiv in vernetzbaren Siliconbeschichtungssystemen für den Einsatz in solchen Beschichtungsprozessen.
Als Standardformulierung wurde eine Mischung aus
100 Gew.-teilen eines verzweigten Polysiloxans mit Vinyldimethylsiloxyendgruppen, das eine Viskosität von 420 mPa.s (25°C) und eine Jodzahl von 8,0 aufweist und gemäß Beispiel 3 von US 6,034,225 hergestellt wird, 3,6 Gew.-teile eines linearen Polysiloxans aus Hydrogenmethylsiloxan- und Trimethylsiloxaneinheiten im Molverhältnis 24 : 1,
1,04 Gew.-teile einer 1 Gew.-%igen (bezogen auf elementares Platin) Lösung eines Platin-1,3-Divinyl-1,1,3,3-tetramethyl-disiloxan-Komplexes in einem $\alpha,\omega$-Divinyldimethylpolysiloxan mit einer Viskosität von 1000 mPa·s bei 25°C und 0,3 Gew.-teile 1-Ethinylcyclohexanol
eingesetzt.
Die erfindungsgemäßen Additive gemäß den in Tabelle 2 angegebenen Herstellungsbeispielen wurden der Standardformulierung gemäß den in Tabelle 2 angegebenen Mengen zugesetzt. Als Vergleich wurde eine Standardformulierung ohne erfindungsgemäßes Additiv eingesetzt. Diese Mischungen wurden zur Papierbeschichtung eingesetzt.
Als Substrat wurde Papier der Fa. Ahlstrom mit der Bezeichnung Glassine Larice Tipo 325 mit 62 $g/m^2$ verwendet. Die Beschichtung erfolgte auf der Pilotbeschichtungsanlage der Fa. Dixon der Modellnummer 1060 mit einem 5-Walzen Auftragswerk, bei 150 m/min. Dabei wurde die Auftragsrolle mit 95% der Papiergeschwindigkeit gefahren. Die Beschichtung wurde im Trockenofen mit 3 m Länge bei 140°C ausgehärtet.
Die Aerosolbildung wurde mit dem Dusttrak Aerosol Monitor Model 8520 bestimmt. Die Probennahme erfolgte zwischen Siliconauftragswalze und Walzenspalt in einem Abstand von 12 cm zur Siliconauftragswalze. Zusätzlich wurde die Aerosolbildung visuell beurteilt und mit den Ziffern 1 - 3 bewertet:

1 keine sichtbare Aerosolbildung
2 schwach sichtbare Aerosolbildung
3 starke Aerosolbildung.

Während der Beschichtungsversuche wurden die maximal angezeigten Aerosolwerte protokolliert. Das Beschichtungsgewicht wurde mittels Röntgenfluoreszenzanalyse in Referenz zu einem geeigneten Standard bestimmt und betrug 4 $g/m^2$.
Weiterhin wurde Einfluss der erfindungsgemäßen Antimisting Additive auf die Aushärtung des Beschichtungssystems mittels Migrationstest bestimmt. Der Migrationstest ist in der Broschüre DEHESIVE® Silicones Testmethoden der Fa. Wacker-Chemie GmbH beschrieben.
Die Ergebnisse sind in Tabelle 2 zusammengefasst.

Tabelle 2:

| Additiv | Menge Additiv in % | Misting, mg/m$^3$ (Dusttrak) | Misting (visuell) | Migration |
|---|---|---|---|---|
| Beispiel 6 | 2 | 3,5 | 1 | 1,5 |
| Beispiel 5 | 4 | 4 | 1 | 1 |
| Beispiel 4 | 4 | 7,5 | 1,5 | 1,5 |
| Beispiel 3 | 5 | 3 | 1 | 1,5 |
| Beispiel 2 | 4 | 3,5 | 1,5 | 2 |
| Beispiel 1 | 8 | 2,5 | 1,5 | 1,5 |
| - | - | 17 | 3 | 2 |

Die Vergleichsversuche zeigen, dass der Zusatz der erfindungsgemäßen verzweigten Organosiliciumverbindung als Antimisting Additive die Aerosolbildung vernetzbarer Siliconbeschichtungssysteme in schnellen Beschichtungsprozessen deutlich reduziert.

Bespiel 9 und Vergleichsversuch gemäß EP-A 716 115:

Ein wichtiges Kriterium für die einfache Verwendbarkeit von Antimisting Additiven in härtbaren Zusammensetzungen ist deren Mischbarkeit mit diesen Zusammensetzungen. Um reproduzierbare Ergebnisse bei der Aushärtung auf der Beschichtungsmaschine zu erhalten, ist es von Vorteil, wenn sich das Additiv in der gewünschten Menge ohne größeren Aufwand in der härtbaren Zusammensetzung homogen verteilen lässt und eine klare Formulierung bildet. Hierzu werden 104,4 g der Standardformulierung gemäß Beispiel 7 mit jeweils 10 g der Additive gemäß den Herstellungsbeispielen 1 bis 6 unter Verwendung eines Glasstabes durch mäßiges Rühren gemischt, sodass in wenigen Minuten eine anwendungsfertige Formulierung entsteht. Alle Formulierungen sind homogen, klar und frei von Schlieren.
Zum Vergleich wird nach dem Stand der Technik ein Antimisting Additiv gemäß EP-A 716 115 hergestellt:
Ein Gemisch aus 34 g 2-Methyl-3-buten-2-ol und 190 g eines Allylpolyethers der Formel $CH_2$=CH-$CH_2O$ $(C_2H_4O)_{9,4}H$ wird mit 200 g eines Trimethylsiloxy-Endgruppen aufweisenden Siloxans aus Hydrogenmethylsiloxan- und Dimethylsiloxaneinheiten (0,30 Gew.-% Aktivwasserstoff, Viskosität 37 mm$^2$/s bei 25°C) gemischt, auf 50°C erwärmt und mit 20 ppm Platin in Form des in Beispiel 8 beschriebenen Platinkatalysators (Karstedt-Katalysator) aktiviert. Die exotherme Reaktion liefert nach 2 Stunden ein klares Produkt mit weniger als 0,002 Gew.-% Aktivwasserstoff und leicht brauner Färbung.
Einrühren von 10 g dieses Produktes in 104,4 g der Standardformulierung gemäß Beispiel 7 liefert ein milchiges Gemisch, das nach 4 Stunden Lagerung starke Phasenseparation zeigt. Auch wenn man nur 5 g dieses Additivs unter starker Scherung mit einem Turrax®-Gerät einmischt, erhält man keine klare Formulierung.

## Patentansprüche

1. Verwendung von Antimisting Additiven in vernetzbaren Siliconbeschichtungszusammensetzungen zur Reduktion der Aerosolbildung, **dadurch gekennzeichnet, dass** als Antimisting Additive Alkenylgruppen aufweisende Siloxancopolymere enthaltend

(a) Siloxaneinheiten der Formel

$$R_aSi(OR^1)_bO_{\frac{4-(a+b)}{2}} \qquad (I),$$

wobei R gleiche oder verschiedene, gegebenfalls halogenierte Kohlenwasserstoffreste mit 1 bis 18 Kohlenstoffatomen je Rest,
$R^1$ gleiche oder verschiedene Alkylreste mit 1 bis 4 Kohlenstoffatomen je Rest, die durch ein Ethersauerstoffatom substituiert sein können, bedeutet,
a 0, 1, 2 oder 3,
b 0, 1, 2 oder 3

und die Summe a+b nicht größer als 3 ist,
(b) je Molekül mindestens eine Siloxaneinheit der Formel

$$AR_cSiO_{\frac{4-(c+1)}{2}} \qquad (II),$$

wobei R die oben dafür angegebene Bedeutung hat,
c 0, 1 oder 2 ist,
A einen Rest der Formel

$$-CH_2CHR^3-R^2(CR^3=CH_2)_{x-1}$$

wobei $R^2$ einen dreiwertigen oder vierwertigen Kohlenwasserstoffrest mit 1 bis 25 Kohlenstoffatomen je Rest,
$R^3$ ein Wasserstoffatom oder einen Alkylrest mit 1 bis 6 Kohlenstoffatomen je Rest und
x 3 oder 4, bedeutet,
und
(c) je Molekül durchschnittlich mindestens eine Einheit, ausgewählt aus der Gruppe von Einheiten der Formeln

$$O_{\frac{4-(c+1)}{2}}R_cSi-A^1-SiR_cO_{\frac{4-(c+1)}{2}} \qquad (III),$$

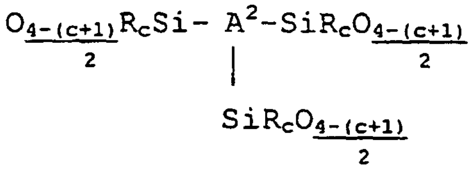

(IV),

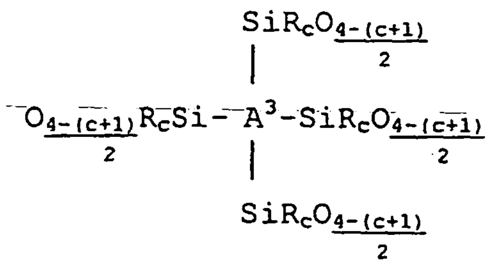

(V),

wobei R und c die oben dafür angegebene Bedeutung haben,
$A^1$ einen Rest der Formel

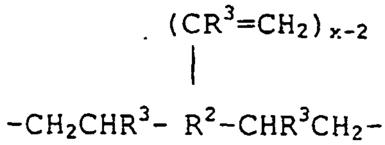

wobei $R^3$, $R^3$ und x die oben dafür angegebene Bedeutung haben,
$A^2$ einen Rest der Formel

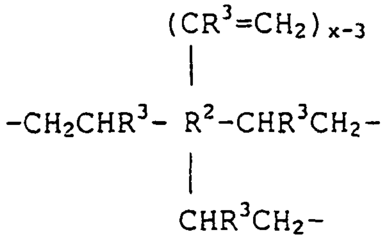

$(x-3 \geq 0)$

wobei $R^2$, $R^3$ und x die oben dafür angegebene Bedeutung haben, und $A^3$ einen Rest der Formel

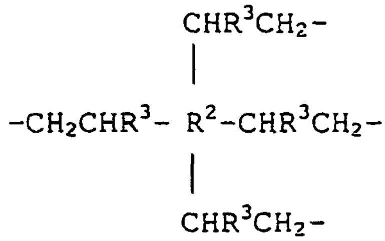

wobei $R^2$ und $R^3$ die oben dafür angegebene Bedeutung haben, mit der Maßgabe, dass $R^2$ kein dreiwertiger Kohlenwasserstoffrest ist, bedeutet.

**2.** Verwendung nach Anspruch 1, **dadurch gekennzeichnet, dass** als Alkenylgruppen aufweisende Siloxancopolymere solche verwendet werden, die enthalten

(a) Siloxaneinheiten der Formel

$R_2SiO$ (I'),

(b) je Molekül durchschnittlich mehr als eine Siloxaneinheit der Formel

$AR_2SiO_{1/2}$ (II')

und

(c) je Molekül durchschnittlich mindestens eine Einheit, ausgewählt aus der Gruppe von Einheiten der Formeln

$O_{1/2}R_2Si\text{-}A^1\text{-}SiR_2O_{1/2}$ (III')

und

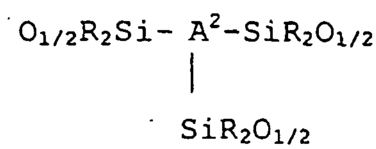

(IV')

und

wobei R, A, $A^1$ und $A^2$ die im Anspruch 1 dafür angegebene Bedeutung haben.

**3.** Verwendung nach Anspruch 1 oder 2, **dadurch gekennzeichnet, dass** der Rest $R^3$ ein Wasserstoffatom ist.

**4.** Verwendung von Antimisting Additiven in vernetzbaren Siliconbeschichtungszusammensetzungen zur Reduktion der Aerosolbildung, **dadurch gekennzeichnet, dass** als Antimisting Additive Alkenylgruppen aufweisende Siloxancopolymere herstellbar, indem mindestens drei aliphatische Doppelbindungen aufweisende organische Verbindung (1) der allgemeinen Formel

$$R^2(CR^3{=}CH_2)_x,$$

wobei $R^2$ einen dreiwertigen oder vierwertigen Kohlenwasserstoffrest mit 1 bis 25 Kohlenstoffatomen je Rest,
$R^3$ ein Wasserstoffatom oder einen Alkylrest mit 1 bis 6 Kohlenstoffatomen je Rest und
x 3 oder 4 bedeutet,
mit Organopolysiloxan (2) mit durchschnittlich mehr als einem Si-gebundenen Wasserstoffatom je Molekül in Gegenwart von die Anlagerung von Si-gebundenem Wasserstoff an aliphatische Doppelbindung förderndem Katalysator (3) umgesetzt wird,
wobei das eingesetzte Verhältnis von aliphatischer Doppelbindung in organischer Verbindung (1) zu Si-gebundenem Wasserstoff im Organopolysiloxan (2) ein solches ist, dass Alkenylgruppen aufweisende Siloxancopolymere mit durchschnittlich mindestens zwei Alkenylgruppen je Molekül der Formel

$$-CR^3{=}CH_2,$$

wobei $R^3$ die oben dafür angegebene Bedeutung hat, erhalten werden, verwendet werden.

**5.** Verwendung nach Anspruch 4, **dadurch gekennzeichnet, dass** als organische Verbindung (1) 1,2,4-Trivinylcyclohexan verwendet wird.

**6.** Verwendung nach Anspruch 4 oder 5, **dadurch gekennzeichnet, dass** als Organopolysiloxan (2) solches der allgemeinen Formel

$$HR_2SiO(SiR_2O)_oSiR_2H$$

wobei R die im Anspruch 1 dafür angegebene Bedeutung hat und o eine ganze Zahl von 50 bis 1000 bedeutet, eingesetzt wird.

**7.** Verwendung nach Anspruch 4, 5 oder 6 **dadurch gekennzeichnet, dass** das eingesetzte Verhältnis von aliphatischer Doppelbindung in organischer Verbindung (1) zu Si-gebundenem Wasserstoff im Organopolysiloxan (2) 1,5 : 1 bis 3,0 :1 beträgt.

**8.** Verwendung nach einem der Ansprüche 1 bis 7, **dadurch gekennzeichnet, dass** als vernetzbare Siliconbeschichtungszusammensetzung solche enthaltend

(A) Organosiliciumverbindungen, die Reste mit aliphatischen Kohlenstoff-Kohlenstoff-Mehrfachbindungen aufweisen,
(B) Organosiliciumverbindungen mit Si-gebundenen Wasserstoffatomen
(C) Die Anlagerung von Si-gebundenem Wasserstoff an aliphatische Mehrfachbindung fördernde Katalysatoren und gegebenenfalls
(D) Inhibitoren

eingesetzt werden.

**9.** Vernetzbare Siliconbeschichtungszusammensetzung mit reduzierter Aerosolbildung enthaltend

(X) Antimisting Additive nach einem der Ansprüche 1 bis 7 in Mengen von 0,5 bis 10 Gew.-%, bezogen auf das Gesamtgewicht der vernetzbaren Siliconbeschichtungszusammensetzung,
(A) Organosiliciumverbindungen, die Reste mit aliphatischen Kohlenstoff-Kohlenstoff-Mehrfachbindungen aufweisen, der allgemeinen Formel

$$R^6{}_gR^5{}_{3-g}SiO\ (SiR^5{}_2O)\ _v\ (SiR^5R^6O)\ _wSiR^5{}_{3-g}R^6{}_g \qquad (IX)$$

wobei $R^5$ einen einwertigen, gegebenenfalls substituierten, von aliphatischen Kohlenstoff-Kohlenstoff-Mehrfachbindungen freien Kohlenwasserstoffrest mit 1 bis 18 Kohlenstoffatomen je Rest und
$R^6$ einen einwertigen Kohlenwasserstoffrest mit terminaler, aliphatischer Kohlenstoff-Kohlenstoff-Mehrfachbindung mit 2 bis 8 Kohlenstoffatomen je Rest bedeutet,
g 0, 1 oder 2,
v 0 oder eine ganze Zahl von 1 bis 1500 und
w 0 oder eine ganze Zahl von 1 bis 200 ist,
mit der Maßgabe, dass durchschnittlich mindestens 1,5 Reste $R^6$ enthalten sind,
(B) Organosiliciumverbindungen mit Si-gebundenen Wasserstoffatomen
(C) Die Anlagerung von Si-gebundenem Wasserstoff an aliphatische Mehrfachbindung fördernde Katalysatoren und gegebenenfalls
(D) Inhibitoren.

**10.** Formkörper hergestellt durch Vernetzung der Zusammensetzungen gemäß Anspruch 9.

**11.** Formkörper gemäß Anspruch 10, **dadurch gekennzeichnet, dass** es sich um Beschichtungen handelt.

**12.** Formkörper gemäß Anspruch 10, **dadurch gekennzeichnet, dass** es sich um klebrige Stoffe abweisende Überzüge handelt.

**13.** Verfahren zur Herstellung von Beschichtungen durch Auftragen von vernetzbaren Zusammensetzungen gemäß Anspruch 9 auf die zu beschichtenden Oberflächen und anschließende Vernetzung der Zusammensetzungen.

**14.** Verfahren zur Herstellung von klebrige Stoffe abweisenden Überzügen durch Auftragen von vernetzbaren Zusammensetzungen gemäß Anspruch 9 auf die klebrige Stoffe abweisend zu machenden Oberflächen und anschließende Vernetzung der Zusammensetzungen.

**Claims**

**1.** Use of antimisting additives in crosslinkable silicone coating compositions for reducing the formation of aerosol, **characterized in that** use is made as antimisting additives of alkenyl-functional siloxane copolymers containing

(a) siloxane units of the formula

$$R_aSi(OR^1)_bO_{\frac{4-(a+b)}{2}} \qquad (I)$$

where R is identical or different, unhalogenated or halogenated hydrocarbon radicals having from 1 to 18 carbon atoms per radical,
$R^1$ is identical or different alkyl radicals having from 1 to 4 carbon atoms per radical, which may be substituted by an ether oxygen atom,
a is 0, 1, 2 or 3,
b is 0, 1, 2 or 3
and the sum a+b is not greater than 3,
(b) per molecule at least one siloxane unit of the formula

$$AR_cSiO_{\frac{4-(c+1)}{2}} \qquad (II)$$

where R is as defined above,
c is 0, 1 or 2,
A is a radical of the formula

$$-CH_2CHR^3-R^2(CR^3=CH_2)_{x-1}$$

where $R^2$ is a trivalent or tetravalent hydrocarbon radical having from 1 to 25 carbon atoms per radical,
$R^3$ is a hydrogen atom or an alkyl radical having from 1 to 6 carbon atoms per radical, and

x is 3 or 4,
and
(c) per molecule on average at least one unit selected from the group consisting of units of the formulae

$$O_{\frac{4-(c+1)}{2}}R_cSi-A^1-SiR_cO_{\frac{4-(c+1)}{2}} \quad \text{(III)},$$

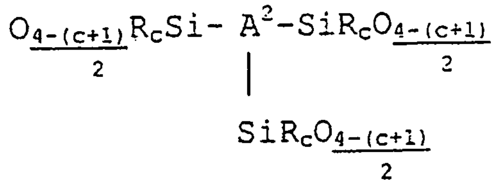

(IV),

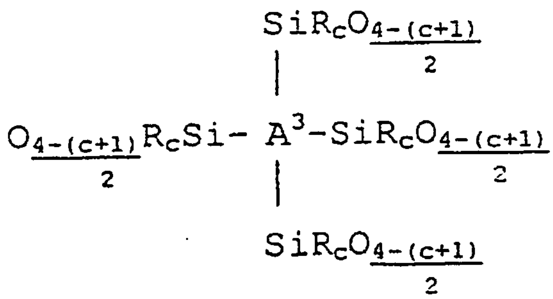

(V),

where R and c are as defined above,
$A^1$ is a radical of the formula

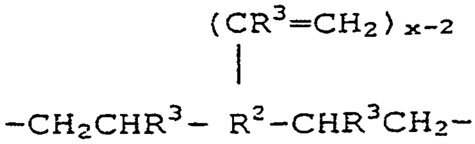

where $R^2$, $R^3$ and x are as defined above,
$A^2$ is a radical of the formula

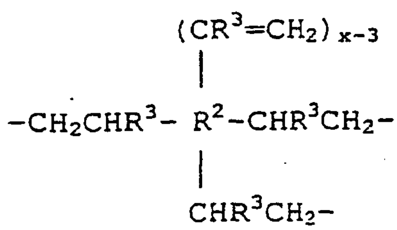

$(x-3\geq 0)$

where $R^2$, $R^3$ and x are as defined above, and
$A^3$ is a radical of the formula

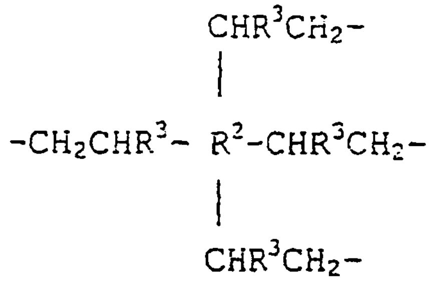

where $R^2$ and $R^3$ are as defined above, with the proviso that $R^2$ is not a trivalent hydrocarbon radical.

2. Use according to Claim 1, **characterized in that** alkenyl-functional siloxane copolymers used include those containing

(a) siloxane units of the formula

$R_2SiO$ (I'),

(b) per molecule on average more than one siloxane unit of the formula

$AR_2SiO_{1/2}$ (II')

and
(c) per molecule on average at least one unit selected from the group consisting of units of the formulae

$O_{1/2}R_2Si\text{-}A^1\text{-}SiR_2O_{1/2}$ (III')

and

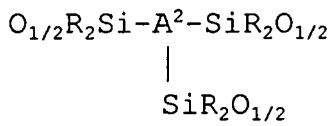 (IV')

and
where R, A, $A^1$ and $A^2$ are as defined in Claim 1.

3. Use according to Claim 1 or 2, **characterized in that** the radical $R^3$ is a hydrogen atom.

4. Use of an antimisting additive in a crosslinkable silicone coating composition for reducing the formation of aerosol, **characterized in that** use is made as antimisting additive of alkenyl-functional siloxane copolymers preparable by reacting organic compound (1) containing at least three aliphatic double bonds, of the general formula

$R^2(CR^3{=}CH_2)_x$,

where $R^2$ is a trivalent or tetravalent hydrocarbon radical having from 1 to 25 carbon atoms per radical,
$R^3$ is a hydrogen atom or an alkyl radical having from 1 to 6 carbon atoms per radical, and x is 3 or 4
with organopolysiloxane (2) having on average more than one Si-bonded hydrogen atom per molecule in the presence of catalyst (3) which promotes the addition of Si-bonded hydrogen onto aliphatic double bond,
the ratio of aliphatic double bond in organic compound (1) to Si-bonded hydrogen in the organopolysiloxane (2) being such that alkenyl-functional siloxane copolymers having on average at least two alkenyl groups per molecule, of the formula

$-CR^3{=}CH_2$,

where $R^3$ is as defined above, are obtained.

**5.** Use according to Claim 4, **characterized in that** said organic compound (1) comprises 1,2,4-trivinylcyclohexane.

**6.** Use according to Claim 4 or 5 **characterized in that** said organopolysiloxane (2) is of the general formula

$$HR_2SiO(SiR_2O)_oSiR_2H$$

where R is as defined in Claim 1 and o is an integer from 50 to 1000.

**7.** Use according to Claim 4, 5 or 6, **characterized in that** the ratio employed of aliphatic double bond in organic compound (1) to Si-bonded hydrogen in the organopolysiloxane (2) is from 1.5:1 to 3.0:1.

**8.** Use according to any of Claims 1 to 7, **characterized in that** said crosslinkable silicone coating composition comprises

(A) organosilicon compounds having radicals containing aliphatic carbon-carbon multiple bonds,
(B) organosilicon compounds containing Si-bonded hydrogen atoms,
(C) catalysts which promote the addition of Si-bonded hydrogen onto aliphatic multiple bond, and if desired
(D) inhibitors.

**9.** Crosslinkable silicone coating composition featuring reduced aerosol formation, comprising

(X) antimisting additives as set forth in any of Claims 1 to 7 in amounts of from 0.5 to 10% by weight, based on the overall weight of the crosslinkable silicone coating composition,
(A) organosilicon compounds having radicals containing aliphatic carbon-carbon multiple bonds, of the general formula

$$R^6_gR^5_{3-g}SiO\ (SiR^5_2O)_v\ (SiR^5R^6O)_wSiR^5_{3-g}R^6_g \qquad (IX)$$

where $R^5$ is a monovalent, unsubstituted or substituted, hydrocarbon radical having from 1 to 18 carbon atoms per radical and being free from aliphatic carbon-carbon multiple bonds
and
$R^6$ is a monovalent hydrocarbon radical having from 2 to
8 carbon atoms per radical and containing a terminal aliphatic carbon-carbon multiple bond,
g is 0, 1 or 2,
v is 0 or an integer from 1 to 1500, and
w is 0 or an integer from 1 to 200,
with the proviso that on average at least 1.5 radicals $R^6$, preferably on average at least 2 radicals $R^6$, are present,
(B) organosilicon compounds containing Si-bonded hydrogen atoms,
(C) catalysts which promote the addition of Si-bonded hydrogen onto aliphatic multiple bond, and if desired
(D) inhibitors.

**10.** Shaped bodies produced by crosslinking the compositions of Claim 9.

**11.** Shaped bodies of Claim 10, **characterized in that** they are coatings.

**12.** Shaped bodies of Claim 10, **characterized in that** they are coatings which repel tacky substances.

**13.** Process for producing coatings by applying crosslinkable compositions according to Claim 9 to the surfaces that are to be coated and then crosslinking the compositions.

**14.** Process for producing coatings which repel tacky substances by applying crosslinkable compositions according to Claim 9 to the surfaces that are to be made repellent to tacky substances and then crosslinking the compositions.

## Revendications

**1.** Utilisation d'additifs antibuée dans des compositions réticulables de revêtement au silicone pour réduire la formation d'aérosol, **caractérisée en ce que**, comme additifs antibuée, on utilise des copolymères de siloxane qui présentent des groupes alcényle et qui contiennent:

(a) des unités de siloxane de formule

$$R_aSi\,(OR^1)_bO_{(4-(a+b))/2} \qquad (I)$$

dans laquelle R représente des groupes hydrocarbonés identiques ou différents, éventuellement halogénés, qui comptent de 1 à 8 atomes de carbone par groupe,
$R^1$ représente des groupes alkyle identiques ou différents qui comptent de 1 à 4 atomes de carbone par groupe et qui peuvent être substitués avec l'atome d'oxygène d'un éther,
a représente 0, 1, 2 ou 3,
b représente 0, 1, 2 ou 3 et
la somme a + b n'étant pas supérieure à 3,
(b) par molécule, au moins une unité siloxane de formule

$$AR_cSiO_{(4-(c+1))/2} \qquad (II)$$

dans laquelle R a la même signification que ci-dessus,
c est égal à 0, 1 ou 2,
A représente un groupe de formule

$$-CH_2CHR^3-R^2(CR^3=CH_2)_{x-1}$$

dans laquelle $R^2$ représente un groupe hydrocarboné trivalent ou quadrivalent qui compte de 1 à 25 atomes de carbone par groupe,
$R^3$ représente un atome d'hydrogène ou un groupe alkyle qui compte de 1 à 6 atomes de carbone par groupe et
x est égal à 3 ou 4 et
(c) par molécule, en moyenne au moins une unité sélectionnée dans l'ensemble constitué des unités de formules

$$O_{\frac{4-(c+1)}{2}}R_cSi-A^1-SiR_cO_{\frac{4-(c+1)}{2}} \qquad (III),$$

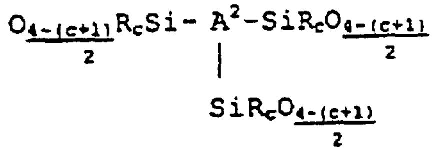

(IV),

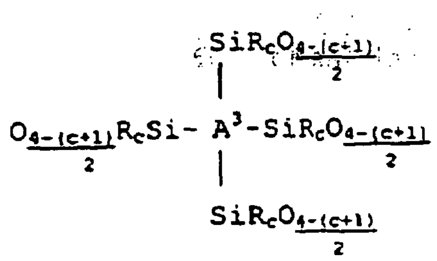

(V),

dans lesquelles R et c ont les mêmes significations que ci-dessus,
$A^1$ représente un groupe de formule

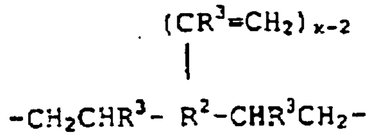

dans laquelle $R^2$, $R^3$ et x ont les mêmes significations que ci-dessus,
$A^2$ représente un groupe de formule

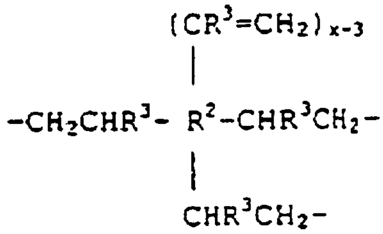

$(x-3 \geq 0)$

dans laquelle $R^2$, $R^3$ et x ont les mêmes significations que ci-dessus, et
$A^3$ représente un groupe de formule

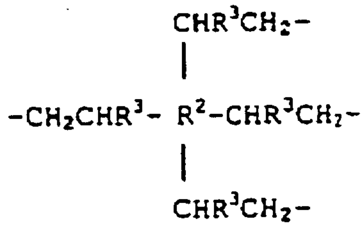

dans laquelle $R^2$ et $R^3$ ont les mêmes significations que ci-dessus, à condition que $R^2$ ne soit pas un groupe hydrocarboné trivalent.

**2.** Utilisation selon la revendication 1, **caractérisée en ce que**, parmi les copolymères de siloxane qui présentent des groupes alcényle, on utilise ceux qui présentent:

(a) des unités siloxane de formule

$R_2SiO$ (I'),

(b) par molécule, en moyenne plus d'une unité siloxane de formule

$AR_2SiO_{1/2}$ (II')

et
(c) par molécule, en moyenne au moins une unité sélectionnée dans l'ensemble constitué des unités de formules

$O_{1/2}R_2Si\text{-}A^1\text{-}SiR_2O_{1/2}$ (III)'

et

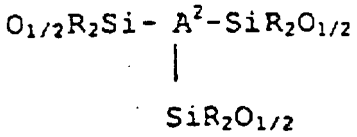
(IV')

dans lesquelles R, A, $A^1$ et $A^2$ ont les mêmes significations que dans la revendication 1.

**3.** Utilisation selon la revendication 1 ou 2, **caractérisée en ce que** le groupe $R^3$ représente un atome d'hydrogène.

**4.** Utilisation d'additifs antibuée dans des compositions réticulables de revêtement au silicone pour réduire la formation d'aérosol, **caractérisée en ce que** comme additifs antibuée, on utilise des copolymères de siloxane qui comprennent des groupes alcényle et que l'on peut obtenir en faisant réagir
un composé organique (1) qui présente au moins trois doubles liaisons aliphatiques et dont la formule générale est:

$$R^2 (CR^3{=}CH_2)_x,$$

dans laquelle $R^2$ représente un groupe hydrocarboné trivalent ou quadrivalent qui compte de 1 à 25 atomes de carbone par groupe,
$R^3$ représente un atome d'hydrogène ou un groupe alkyle qui compte de 1 à 6 atomes de carbone par groupe et x est égal à 3 ou 4,
avec un organopolysiloxane (2) dont chaque molécule compte en moyenne plus d'un atome d'hydrogène lié au Si, en présence d'un catalyseur (3) qui favorise la fixation sur la double liaison aliphatique de l'hydrogène lié au Si, le rapport utilisé entrer la double liaison aliphatique dans le composé organique (1) et l'hydrogène lié par Si dans l'organopolysiloxane (2) étant tel que l'on obtient des copolymères de siloxane qui présentent des groupes alcényle et, par molécule, en moyenne au moins deux groupes alcényle de formule

$$-CR^3{=}CH_2 ,$$

dans laquelle $R^3$ a la même signification que ci-dessus.

**5.** Utilisation selon la revendication 4, **caractérisée en ce que** le composé organique utilisé (1) est le 1,2,4-trivinylcyclohexane.

**6.** Utilisation selon la revendication 4 ou 5, **caractérisée en ce que** l'organopolysiloxane (2) utilisé a la formule générale

$$HR_2SiO(SiR_2O)_oSiR_2H$$

dans laquelle R a la même signification que dans la revendication 1 et o représente un nombre entier compris entre 50 et 1 000.

**7.** Utilisation selon les revendications 4, 5 ou 6, **caractérisée en ce que** le rapport utilisé entre la double liaison aliphatique dans le composé organique (1) et l'hydrogène lié au Si dans l'organopolysiloxane (2) est compris entre 1,5:1 et 3,0:1.

**8.** Utilisation selon l'une quelconque des revendications 1 à 7, **caractérisée en ce qu'**on utilise une composition réticulable de revêtement au silicone qui comprend

(A) des composés organiques du silicium qui présentent des groupes qui comportent des liaisons aliphatiques multiples carbone-carbone,
(B) des composés organiques du silicium qui présentent des atomes d'hydrogène liés par Si,
(C) des catalyseurs qui favorisent la fixation de l'hydrogène lié au Si sur les liaisons multiples aliphatiques et éventuellement
(D) des inhibiteurs.

**9.** Composition réticulable de revêtement au silicone dont la formation d'aérosol est réduite, qui comprend

(X) des additifs antibuée selon l'une quelconque des revendications 1 à 7, en des quantités de 0,5 à 10% en poids, par rapport au poids total de la composition réticulable de revêtement au silicone,
(A) des composés organiques du silicium qui présentent des groupes qui comportent des liaisons multiples carbone-carbone aliphatiques de formule générale

$$R^6_gR^5_{3-g}SiO(SiR^5_2O)_v\ (SiR^5R^6O)_wSiR^5_{3-g}R^6_g \qquad (IX)$$

dans laquelle $R^5$ représente un groupe hydrocarboné monovalent, éventuellement substitué, exempt de liaisons multiples carbone-carbone aliphatiques, qui compte de 1 à 18 atomes de carbone par groupe et
$R^6$ représente un groupe hydrocarboné monovalent avec liaison multiple carbone-carbone aliphatique terminale qui compte de 2 à 8 atomes de carbone par groupe,
g est égal à 0, 1 ou 2,
v est égal à 0 ou représente un nombre entier compris entre 1 et 1500 et
w est égal à 0 ou représente un nombre entier compris entre 1 et 200,
à condition qu'en moyenne au moins 1,5 groupe $R^6$ soit compris,
(B) des composés organiques du silicium qui présentent des atomes d'hydrogène liés à Si,
(C) des catalyseurs qui favorisent la fixation de l'hydrogène lié à Si aux liaisons multiples aliphatiques et éventuellement
(D) des inhibiteurs.

**10.** Corps façonné fabriqué par réticulation des compositions selon la revendication 9.

**11.** Corps façonné selon la revendication 10, **caractérisé en ce qu'**il s'agit d'un revêtement.

**12.** Corps façonné selon la revendication 10, **caractérisé en ce qu'**il s'agit d'un revêtement qui repousse les substances collantes.

**13.** Procédé pour fabriquer des revêtements en apportant des compositions réticulables selon la revendication 9 sur les surfaces à revêtir et en réticulant ensuite ces compositions.

**14.** Procédé pour fabriquer des revêtements qui repoussent les substances collantes, en apportant des compositions réticulables selon la revendication 9 sur les surfaces qu'il faut rendre répulsives aux substances collantes et en réticulant ensuite ces compositions.